# EUROPÄISCHE PATENTSCHRIFT

(11) **EP 3 667 899 B1**
(45) Veröffentlichungstag und Bekanntmachung des Hinweises auf die Patenterteilung: **12.08.2026**
(21) Anmeldenummer: 18465632.0
(22) Anmeldetag: 11.12.2018
(51) Int. Cl.: H02P 29/024, H02P 29/028, H02P 27/08, H02P 3/22

(54) **MOTORSTEUERUNGSVORRICHTUNG FÜR EINE MOTOREINHEIT UND EIN VERFAHREN ZUM BETRIEB EINER SOLCHEN MOTORSTEUERUNGSVORRICHTUNG**
MOTOR CONTROL DEVICE FOR A MOTOR UNIT AND METHOD FOR OPERATING SUCH A MOTOR CONTROL DEVICE
DISPOSITIF DE COMMANDE DE MOTEUR POUR UNE UNITÉ DE MOTEUR ET PROCÉDÉ DE FONCTIONNEMENT D'UN TEL DISPOSITIF DE COMMANDE DE MOTEUR

(43) Veröffentlichungstag der Anmeldung: 17.06.2020
(73) Patentinhaber: Schaeffler Technologies AG & Co. KG, 91074 Herzogenaurach (DE)
(72) Erfinder: Loerincz, Robert Istvan, 300414 Timisoara (RO); Katzmann, Johannes, 93059 Regensburg (DE); Antongirolami, Diego, 90429 Nürnberg (DE); Arabackyj, Marc, 90408 Nürnberg (DE)
(74) Vertreter: Schaeffler Technologies

(56) Entgegenhaltungen:
- DE-C1- 10 059 173
- DE-T5- 112017 000 331
- US-A1- 2015 023 084

## Beschreibung

Die Erfindung betrifft eine Motorsteuerungsvorrichtung für eine Motoreinheit und ein Verfahren zum Betrieb einer solchen Motorsteuerungsvorrichtung.

Aus dem Stand der Technik sind Motorsteuerungsvorrichtungen für Motoreneinheiten bekannt, wobei zur Ansteuerung genau einer Motoreinheit jeweils eine elektronische Schaltung vorgesehen ist.

Ferner sind Motoreinheiten, beispielsweise in Form von elektrischen Maschinen, bekannt. Beispielsweise umfassen elektrische Maschinen Motoreinheiten, Aktuatoren und Stator-Rotorbaugruppen.

Motoreinheiten werden beispielsweise in Fahrzeugen zum Betrieb dessen eingesetzt und sind somit Teil einer sicherheitsrelevanten Anwendung. Sicherheitsrelevante Anwendungen müssen im Fall einer gefährlichen Fehlfunktion in einen sicheren Zustand versetzt werden. Beispielsweise spezifiziert ISO-Norm 26262 Sicherheitsanforderungsstufen ASIL (kurz für: Automotive Safety Integrity Level) für sicherheitsrelevante elektrische/elektronische Anwendungen in Kraftfahrzeugen.

Aus DE 100 59 173 C1 ist eine Antriebssteuerung für einen Drehstrommotor bekannt. Zur Kombination der beiden technisch konträren Funktionen "sicherer Halt" und "Ankerkurzschlussbremsung" in einer Antriebssteuerung werden durch zwei Mittel zur Impulssperre die jeweiligen Stromventile im Fehlerfall gesperrt. Dafür werden jeweilige Versorgungsspannungen für eine Ansteuerung der Stromventile des oberen und die des unteren Brückenzweiges unterbrochen. Zur Ankerkurzschlussbremsung wird im Fehlerfall oder auch betriebsmäßig die Ständerwicklung des Drehstrommotors kurzgeschlossen, indem alle Stromventile eines Brückenzweiges einschaltbar sind, wobei eine Spannung zum Einschalten dieser Stromventile über eine Verknüpfungslogik bereitgestellt wird, sobald die jeweilige Versorgungsspannung für eine Ansteuerung der Stromventile dieses Brückenzweiges durch ein Mittel zur Impulssperre unterbrochen wird.

Aus DE 11 2017 000 331 T5 ist ein Invertertreiber bekannt. Wenn eine Bedingung zum Durchführen einer aktiven Kurzschlusssteuerung erfüllt ist, wird eine Inverterschaltung umgehend auf einen aktiven Kurzschlusszustand umgeschaltet. Dafür wird eine Rücksetzschaltung bereitgestellt, die auf der Basis eines Überspannungsschutzsignals, das von einem Überspannungsschutz ausgegeben wird, den Signalpegel eines Ansteuersignals auf einen Signalpegel einstellt, um ein Schaltelement auszuschalten. Weiterhin wird eine Steuersignaländerungsschaltung bereitgestellt, die anstatt eines Umschaltsteuersignals ein Steuersignal mit einem logischen Pegel zum Steuern des Schaltelements auf einen Ein-Zustand auf der Basis des Überspannungsschutzsignals sendet. Die Rücksetzschaltung ist mit jeder der ersten Ansteuerschaltungen für alle der Phasen verbunden. Die Steuersignaländerungsschaltung ist zwischen einer Inverterschaltung und jeder von zweiten Ansteuerschaltungen für alle der Phasen verbunden.

Aus US 2015/023084 A1 ist schließlich eine Invertersteuerung mit drei Steuerschaltungen, die jeweils eine Halbbrücke ansteuern, bekannt.

Der Erfindung liegt die Aufgabe zugrunde, eine verbesserte Motorsteuerungsvorrichtung für eine Motoreinheit und ein neuartiges Verfahren zum Betrieb einer solchen Motorsteuerungsvorrichtung anzugeben.

Hinsichtlich der Motorsteuerungsvorrichtung wird die Aufgabe erfindungsgemäß durch die Merkmale des Anspruchs 1 gelöst. Hinsichtlich des Verfahrens zum Betrieb einer solchen Motorsteuerungsvorrichtung wird die Aufgabe erfindungsgemäß durch die Merkmale des Anspruchs 9 gelöst.

Vorteilhafte Ausgestaltungen der Erfindung sind Gegenstand der Unteransprüche.

Die erfindungsgemäße Motorsteuerungsvorrichtung für eine Motoreinheit umfasst eine Steuereinheit, eine Sicherheitsstufe zur Einstellung eines Sicherheitszustands der Motoreinheit, eine der Steuereinheit nachgeordnete Treiberstufe und eine der Treiberstufe nachgeordnete Leistungsbrückenschaltung. Die Treiberstufe umfasst drei separate elektronische Schaltungen zur Ansteuerung der Leistungsbrückenschaltung, , wobei die Treiberstufe hierfür drei separate Gate-Treiber umfasst, wobei jedem Gate-Treiber jeweils eine der elektronischen Schaltungen zugeordnet ist, wobei die elektronischen Schaltungen anwendungsspezifische integrierte Schaltungen sind. Die Sicherheitsstufe ist ausgebildet, im Fall einer ermittelten Fehlfunktion der Leistungsbrückenschaltung einen der Fehlfunktion zugeordneten Sicherheitszustand auszuwählen und/oder zu aktivieren. Des Weiteren ist die Sicherheitsstufe ausgebildet, eine Synchronisation der drei elektronischen Schaltungen in Abhängigkeit des ausgewählten Sicherheitszustands durchzuführen.

Beispielsweise ist die Motoreinheit ein Elektromotor oder eine Aktuatoranordnung, bei welchem/welcher eine fehlerhafte oder versagende Ansteuerung, beispielsweise nach Norm ISO 26262, zuverlässig und frühzeitig erkannt wird.

In einer möglichen Ausführungsform ist die Motoreinheit ein Gleichstrommotor, insbesondere ein so genannter bürstenloser Gleichstrommotor. Zum Beispiel ist die Motoreinheit ein dreiphasiger bürstenloser Gleichstrommotor.

Mittels der erfindungsgemäßen Motorsteuerungsvorrichtung ist eine einzige Motoreinheit von drei separaten elektronischen Schaltungen der Treiberstufe ansteuerbar. Beispielsweise sind die elektronischen Schaltungen so genannte anwendungsspezifische integrierte Schaltungen, welche unter ASICs (engl., kurz für: Application-Specific Integrated Circuit) bekannt sind. Die Leistungsbrücke ist also von drei separaten elektronischen Schaltungen ansteuerbar. In herkömmlichen Motoreinheiten wird die Leistungsbrücke von einer einzigen elektronischen Schaltung angesteuert. Durch Verwendung von drei separaten elektronischen Schaltungen ist ein Leistungsbereich einer beispielsweise 48 V betriebenen Motoreinheit, insbesondere eines bürstenlosen Gleichstrommotors, erweitert. Insbesondere ist mittels der Verwendung von drei separaten elektronischen Schaltungen eine Verdreifachung des Leistungsbereichs, insbesondere einer Ausgangsleistung der Leistungsbrückenschaltung möglich. Bei Verwendung von mehr als einer elektronischen Schaltung zur Ansteuerung einer Leistungsbrückenschaltung müssen Sicherheitsanforderungen der Norm ISO 26262 zumindest bis ASIL C erfüllt werden. Beispielsweise können kritische Situationen zu einem Ausfall der Motoreinheit oder zumindest von einzelnen Bauelementen der Motoreinheit oder zu einem Kurzschluss führen. Dabei kann es zu einem unerwünschten hohen Stromfluss und somit zu einer Erwärmung der Bauelemente kommen, wodurch diese beschädigt werden können.

Die erfindungsgemäße Motorsteuerungsvorrichtung ermöglicht im Fall einer sicherheitsrelevanten Fehlfunktion drei separate elektronische Schaltungen zeitgleich aktiv und kontrolliert in den Sicherheitszustand, insbesondere sicheren Betriebszustand, zu versetzen. Insbesondere können dadurch Sicherheitsanforderungsstufen der Norm ISO 26262 bis zur Stufe ASIL C und D erfüllt werden. Ein sicherer Zustand ist anwendungsabhängig beispielsweise durch einen gebremsten oder durch einen frei laufenden Rotor der Motoreinheit, insbesondere des bürstenlosen Gleichstrommotors, erreicht. Möglich ist auch, mehr als drei separate elektronische Schaltungen zu verwenden, wobei alle elektronischen Schaltungen über die Sicherheitsstufe miteinander gekoppelt und synchronisiert in den Sicherheitszustand überführbar sind.

Zum Beispiel ist die Leistungsbrückenschaltung eine Wechselrichterbrücke, wie beispielsweise ein Umrichter.

Gemäß einer Ausführungsform ist die Sicherheitsstufe zwischen der Steuereinheit und der Treiberstufe angeordnet. Zum Beispiel umfasst die Steuereinheit einen Mikrocontroller. Die Treiberstufe umfasst zumindest einen so genannten Gate-Treiber. Insbesondere umfasst die Treiberstufe drei separate Gate-Treiber, wobei jeweils ein Gate-Treiber eines der elektronischen Schaltungen, insbesondere so genannten ASICs, ansteuert. Die Steuereinheit ist mit der Treiberstufe signaltechnisch verbunden. Insbesondere ist die Steuereinheit mit jedem Gate-Treiber zur Kommunikation von Kontrollsignalen verbunden. Die Sicherheitsstufe ist sowohl mit der Steuereinheit als auch mit der Treiberstufe gekoppelt. Beispielsweise steuert die Treiberstufe Schaltelemente der Leistungsbrückenschaltung so an, dass ein/e mittels eines Steuersignals von der Steuereinheit vorgegebene Betriebsspannung, Drehwinkel, Drehgeschwindigkeit und/oder Drehrichtung der Motoreinheit erzielt werden.

In einer Weiterbildung umfasst die Leistungsbrückenschaltung drei Halbbrückenschaltungen, wobei jede der Halbbrückenschaltungen eine Phase ausgibt. Im Fall einer als bürstenloser Gleichstrommotor ausgebildeten Motoreinheit steuert jede Phase beispielsweise jeweils eine gleiche Anzahl von Statorelementen, wie Spulen, an. Beispielsweise ist die Motoreinheit ein dreiphasiger bürstenloser Gleichstrommotor, wobei jede der drei Halbbrückenschaltungen jeweils eine Phase des bürstenlosen Gleichstrommotors ansteuert.

Eine mögliche Weiterbildung sieht vor, dass jeweils eine der Halbbrückenschaltungen mit jeweils einer der elektronischen Schaltungen gekoppelt ist. Die Halbbrückenschaltungen umfassen jeweils einen Hoch-Leistungsschalter und einen Nieder-Leistungsschalter, die in Abhängigkeit der Synchronisation der elektronischen Schaltungen jeweils ab- und/oder anschaltbar sind. Insbesondere sind in Abhängigkeit der Synchronisation Schaltzustände der Halbbrückenschaltungen synchronisiert zueinander einstellbar. Die Hoch-Leistungsschalter sind so genannte High-Side-Leistungsschalter und die Nieder-Leistungsschalter sind so genannte Low-Side-Leistungsschalter. Zum Beispiel sind die Leistungsschalter Feldeffekttransistoren, insbesondere Metall-Oxid-Halbleiter-Feldeffekttransistoren, welche auch unter MOSFETs (engl., kurz für: Metal-Oxide-Semiconductor Field-Effect Transistor) bekannt sind.

Gemäß einer möglichen Weiterbildung sind zwei auswählbare Sicherheitszustände vorgegeben, wobei in einem ersten Sicherheitszustand die Hoch- und Nieder-Leistungsschalter abzuschalten sind, und in einem zweiten Sicherheitszustand sind die Hoch-Leistungsschalter abzuschalten und die Nieder-Leistungsschalter anzuschalten und/oder umgekehrt. Der Sicherheitszustand ist je nach Anwendung der Motoreinheit auswählbar, wodurch die Motorsteuerungsvorrichtung hinsichtlich des Sicherheitszustands konfigurierbar ist. Zum Beispiel kann ein sicherer Zustand dadurch erreicht werden, dass der Rotor des bürstenlosen Gleichstrommotors in eine gewisse vorbestimmte Position gebracht oder mit einer gewissen vorbestimmten Drehgeschwindigkeit bewegt wird. Es ist auch möglich, einen sicheren Zustand zu erreichen, indem alle Spulenversorgungsleitungen stromlos geschaltet werden. Ein weiterer sicherer Zustand kann beispielsweise dadurch erreicht werden, dass der Rotor des bürstenlosen Gleichstrommotors gebremst wird.

Zum Beispiel ist mittels des ersten Sicherheitszustands ein hochohmiger Zustand, insbesondere ein Freilaufzustand der Motoreinheit erzielbar. Beispielsweise ist der erste Sicherheitszustand ein hochohmiger Betriebszustand zwischen Ausgängen einer Ansteuerelektronik der Motoreinheit. Mittels des zweiten Sicherheitszustands ist beispielsweise ein niederohmiger Zustand, insbesondere ein Abbremszustand der Motoreinheit erzielbar. Beispielsweise ist der zweite Sicherheitszustand ein niederohmiger Betriebszustand zwischen Ausgängen einer Ansteuerelektronik der Motoreinheit. In einem Normalfall sind alle Nieder-Leistungsschalter eingeschaltet und alle Hoch-Leistungsschalter abgeschaltet. In einem Ausnahmefall, beispielsweise eines Kurzschlusses, zwischen den Hoch-Leistungsschaltern und den Phasen der Motoreinheit sind alle Hoch-Leistungsschalter eingeschaltet und alle Nieder-Leistungsschalter abgeschaltet.

In einer weiteren Ausführungsform sind die elektronischen Schaltungen der Treiberstufe jeweils über eine Anzahl von Schaltelementen, wie beispielsweise Schaltpins, mit der Sicherheitsstufe gekoppelt. Somit sind Schaltvorgänge zur Aktivierung eines jeweiligen Sicherheitszustands über die Sicherheitsstufe synchronisiert ausführbar. Insbesondere umfassen die elektronischen Schaltungen jeweils eine gleiche Anzahl von Schaltelementen. Zur Durchführung eines aktivierten Sicherheitszustands wird jeweils das gleiche Schaltelement einer jeweiligen elektronischen Schaltung zeitgleich angesteuert. Beispielsweise umfasst die Sicherheitsstufe eine Sicherheitsüberwachungsschaltung zur Überwachung der Sicherheitsstufe.

In dem Verfahren zum Betrieb der beschriebenen Motorsteuerungsvorrichtung wird mittels der Sicherheitsstufe im Fall einer ermittelten Fehlfunktion der Leistungsbrückenschaltung ein der Fehlfunktion zugeordneter Sicherheitszustand ausgewählt und/oder aktiviert, wobei eine Synchronisation der drei elektronischen Schaltungen in Abhängigkeit des ausgewählten Sicherheitszustands durchgeführt wird.

Gemäß einer Ausgestaltung des Verfahrens werden in einem ersten Sicherheitszustand die Hoch- und Nieder-Leistungsschalter abgeschaltet. In einem zweiten Sicherheitszustand werden die Hoch-Leistungsschalter abgeschaltet und die Nieder-Leistungsschalter angeschaltet und/oder umgekehrt. Zum Beispiel ist der erste Sicherheitszustand ein Freilaufzustand der Motoreinheit, dem als Schaltzustand ein Zustand hoher Impedanz zugeordnet wird. Hierfür wird eine Abschaltung aller Hoch- und Nieder-Leistungsschalter durchgeführt. Weiterhin ist der zweite Sicherheitszustand ein Abbremszustand der Motoreinheit, dem ein Schaltzustand zugeordnet wird, bei dem im Normalfall alle Nieder-Leistungsschalter angeschaltet und alle Hoch-Leistungsschalter abgeschaltet werden. In einem Ausnahmefall, beispielsweise eines Kurzschlusses, zwischen den Hoch-Leistungsschalter und den Phasen der Motoreinheit werden alle Hoch-Leistungsschalter angeschaltet und alle Nieder-Leistungsschalter abgeschaltet.

In einem möglichen Ausführungsbeispiel wird eine Aktivierung und Schaltung in eines der Sicherheitszustände vorrangig ausgeführt. Beispielsweise wird im Fall einer ermittelten Fehlfunktion ein RESET-Befehl, d. h. Rückstellbefehl an die Treiberstufe, insbesondere an die einzelnen Gate-Treiber, zur Ausführung dessen gesendet. Im erfindungsgemäßen Verfahren wird während der Aktivierung und Schaltung eines ausgewählten Sicherheitszustands ein RESET-Schaltelement ignoriert, um die Schaltung in den Sicherheitszustand aktiv zu halten. Insbesondere wird die Aktivierung und Schaltung des Sicherheitszustands von der Steuereinheit und/oder von der Sicherheitsüberwachungsschaltung angesteuert.

In einer Weiterbildung des Verfahrens wird der zweite Sicherheitszustand in Abhängigkeit ermittelter Kurzschlüsse über die Hoch-Leistungsschalter oder die Nieder-Leistungsschalter ausgewählt und/oder aktiviert.

Ausführungsbeispiele der Erfindung werden im Folgenden anhand von Zeichnungen näher erläutert.

Dabei zeigen:
Fig. 1 schematisch ein Ausführungsbeispiel eines Fahrzeugs mit einer Motoreinheit,
Fig. 2A und 2B schematisch jeweils ein Ausführungsbeispiel einer Motorsteuerungsvorrichtung zum Betrieb einer Motoreinheit, und
Fig. 3 schematisch ein Verfahren, insbesondere Einstellverlauf, zum Betrieb der Motorsteuerungsvorrichtung nach Fig. 2.

Einander entsprechende Teile sind in allen Figuren mit den gleichen Bezugszeichen versehen.

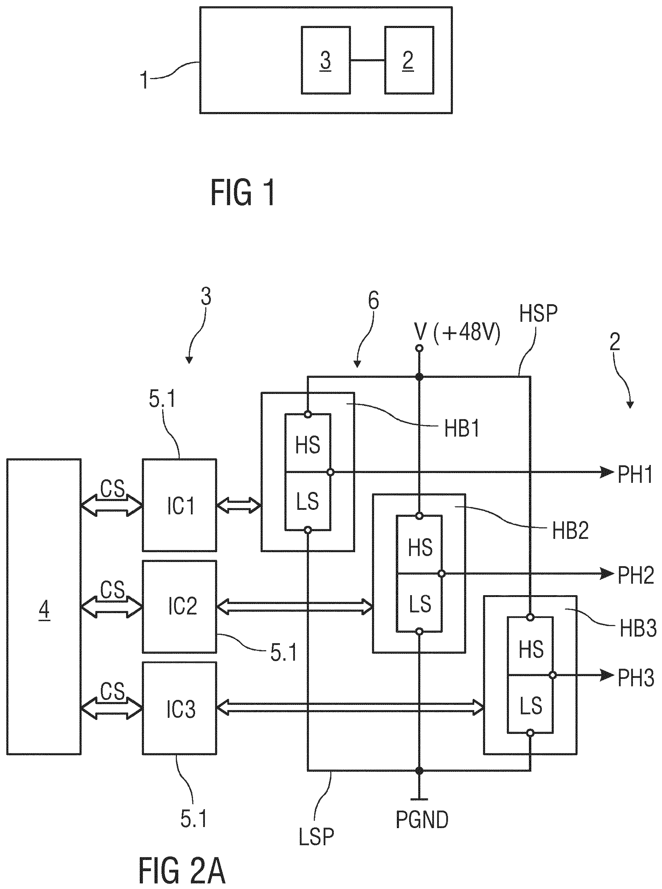

**Figur 1** zeigt schematisch ein Ausführungsbeispiel eines Fahrzeugs 1 mit einer Motoreinheit 2.

Die Motoreinheit 2 ist zum Betrieb des Fahrzeugs 1 oder zumindest zum Betrieb einzelner Fahrzeugkomponenten ausgebildet. Beispielsweise ist die Motoreinheit 2 eine Elektromotoreneinheit, bei der eine fehlerhafte oder versagende Ansteuerung, beispielsweise nach Norm ISO 26262, zuverlässig und frühzeitig erkannt wird.

Im dargestellten Ausführungsbeispiel ist die Motoreinheit 2 beispielsweise ein Gleichstrommotor. Zum Beispiel ist die Motoreinheit 2 ein bürstenloser Gleichstrommotor. Insbesondere ist die Motoreinheit 2 dreiphasig ausgeführt.

Des Weiteren umfasst die Motoreinheit 2 eine nicht näher dargestellte Statorbaugruppe und einen mit der Statorbaugruppe gekoppelten Rotor. Insbesondere sind die Statorbaugruppe und der Rotor magnetisch miteinander gekoppelt, wobei der Rotor durch Bestromung der Statorbaugruppe steuerbar ist. Die Statorbaugruppe umfasst beispielsweise eine Spulenanordnung mit drei elektrisch und um jeweils 120° versetzten Spulen. Im Inneren der Statorbaugruppe ist der drehbare Rotor angeordnet. Beispielsweise umfasst der Rotor einen nicht näher dargestellten Permanentmagneten, der in Abhängigkeit einer Ansteuerung der jeweiligen Spulen um die eigene Rotationsachse rotiert. Insbesondere wird bei einer Beaufschlagung der Statorbaugruppe mit elektrischer Energie ein Magnetfeld erzeugt, wodurch der Rotor aufgrund von gegenseitigen magnetischen Anziehungs- und Abstoßungskräften in Bewegung versetzbar ist.

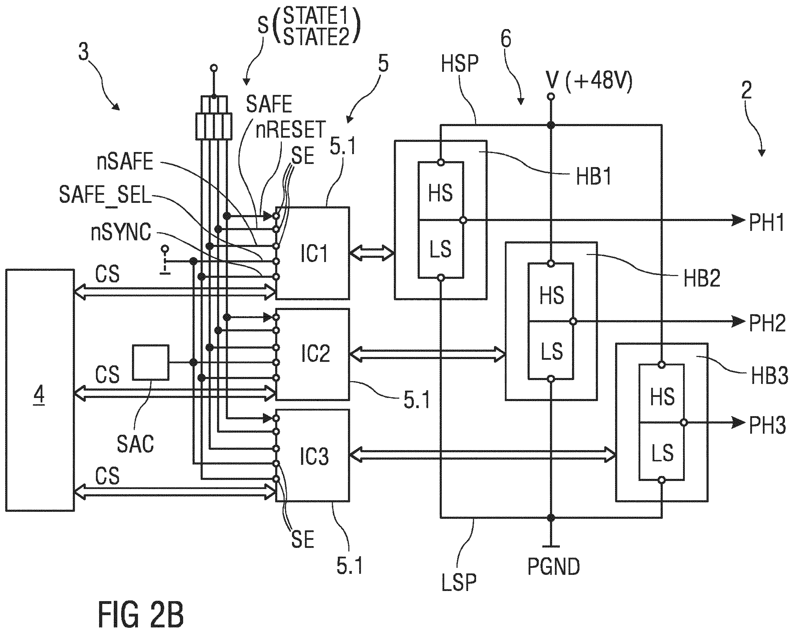

**Figur 2A** **und** **2B** zeigen schematisch jeweils ein Ausführungsbeispiel einer Motorsteuerungsvorrichtung 3 für die Motoreinheit 2, insbesondere für den dreiphasigen bürstenlosen Gleichstrommotor.

Die in **Figur 2A** dargestellte Motorsteuerungsvorrichtung 3 umfasst eine Steuereinheit 4, eine der Steuereinheit 4 nachgeordnete Treiberstufe 5 und eine der Treiberstufe 5 nachgeordnete Leistungsbrückenschaltung 6.

Die Treiberstufe 5 umfasst drei separate elektronische Schaltungen IC1 bis IC3 zur Ansteuerung der Leistungsbrückenschaltung 6. Die Steuereinheit 4 ist ausgebildet, alle drei separaten elektronischen Schaltungen IC1 bis IC3 anzusteuern. Beispielsweise umfasst die Treiberstufe 5 hierfür drei separate, so genannte Gate-Treiber 5.1. Die Gate-Treiber 5.1 sind jeweils mit der Steuereinheit 4 gekoppelt, wobei jedem Gate-Treiber 5.1 jeweils eine der elektronischen Schaltungen IC1 bis IC3 zugeordnet ist. Die Steuereinheit 4 ist mit jedem Gate-Treiber 5.1 zur Kommunikation von Kontrollsignalen CS verbunden.

Die Steuereinheit 4 umfasst beispielsweise einen Mikrocontroller zur Ansteuerung der Motoreinheit 2. Des Weiteren ist die Steuereinheit 4 ausgebildet, einen Funktionsmodus der Leistungsbrückenschaltung 6 und somit indirekt die Motoreinheit 2 zu steuern.

Beispielsweise sind die elektronischen Schaltungen IC1 bis IC3 anwendungsspezifische integrierte Schaltungen, insbesondere so genannte ASICs (engl., kurz für: Application-Specific Integrated Circuits). Die Leistungsbrückenschaltung 6 ist also von drei separaten elektronischen Schaltungen IC1 bis IC3 ansteuerbar. Durch Verwendung von drei separaten elektronischen Schaltungen IC1 bis IC3 ist ein Leistungsbereich einer beispielsweise 48 V betriebenen Motoreinheit 2 erweitert. Insbesondere ist mittels der Verwendung von drei separaten elektronischen Schaltungen IC1 bis IC3 eine Verdreifachung des Leistungsbereichs, insbesondere einer Ausgangsleistung der Leistungsbrückenschaltung 6 möglich.

Die Leistungsbrückenschaltung 6 ist beispielsweise ein Umrichter. Zur Phasenbildung und Phasenausgabe umfasst die Leitungsbrückenschaltung 6 drei elektrische Halbbrückenschaltungen HB1 bis HB3. D. h., jeder Phase PH1 bis PH3 des dreiphasigen bürstenlosen Gleichstrommotors ist jeweils eine Halbbrückenschaltung HB1 bis HB3 zugeordnet.

Insbesondere sind jeder Halbbrückenschaltung HB1 bis HB3 jeweils ein Gate-Treiber 5.1 und eine elektronische Schaltung IC1 bis IC3 zugeordnet. D. h., die Halbbrückenschaltungen HB1 bis HB3 sind über die mit diesen korrespondierenden elektronischen Schaltungen IC1 bis IC3 mit der Steuereinheit 4 verbunden.

Die Halbbrückenschaltungen HB1 bis HB3 umfassen jeweils einen Hoch-Leistungsschalter HS und einen Nieder-Leistungsschalter LS, die in Abhängigkeit der Synchronisation der elektronischen Schaltungen IC1 bis IC3 jeweils ab- und/oder anschaltbar sind. Die Hoch-Leistungsschalter HS sind beispielsweise zueinander parallel geschaltet. Die Nieder-Leistungsschalter LS sind beispielsweise ebenfalls zueinander parallel geschaltet.

Weiterhin umfasst die Leistungsbrückenschaltung 6 einen Hoch-Leistungszweig HSP und einen Nieder-Leistungszweig LSP. Beispielsweise liegt die Leistungsbrückenschaltung 6 über den Hoch-Leistungszweig HSP, welcher alle Hoch-Leistungsschalter HS miteinander verbindet, an einer Versorgungsspannung V (+48 V) an. Über den Nieder-Leistungszweig LSP, welcher alle Nieder-Leistungsschalter LS miteinander verbindet, ist die Leistungsbrückenschaltung 6 mit Masse PGND (PGND, engl., kurz für: Power Ground) verbunden.

Insbesondere sind in Abhängigkeit der Synchronisation Schaltzustände der Halbbrückenschaltungen HB1 bis HB3 synchronisiert zueinander einstellbar. Die Hoch-Leistungsschalter HS sind so genannte High-Side-Leistungsschalter und die Nieder-Leistungsschalter LS sind so genannte Low-Side-Leistungsschalter. Zum Beispiel sind die Leistungsschalter Feldeffekttransistoren, insbesondere Metall-Oxid-Halbleiter-Feldeffekttransistoren, welche auch unter MOSFETs (engl., kurz für: Metal-Oxide-Semiconductor Field-Effect Transistor) bekannt sind.

Bei Verwendung von mehr als einer elektronischen Schaltung IC1 bis IC3 zur Ansteuerung einer einzigen Leistungsbrückenschaltung 6 müssen Sicherheitsanforderungen der Norm ISO 26262 zumindest bis ASIL C erfüllt werden.

Um diese Sicherheitsanforderungen zu erfüllen, umfasst die Motorsteuerungsvorrichtung 3 eine in **Figur 2B** näher dargestellte Sicherheitsstufe S zur Einstellung eines Sicherheitszustands STATE1, STATE2 der Motoreinheit 2. Die Sicherheitsstufe S ist ausgebildet, im Fall einer ermittelten Fehlfunktion der Leistungsbrückenschaltung 6 einen der Fehlfunktion zugeordneten Sicherheitszustand STATE1, STATE2 auszuwählen und/oder zu aktivieren. Zudem ist die Sicherheitsstufe S ausgebildet, eine Synchronisation der drei elektronischen Schaltungen IC1 bis IC3 in Abhängigkeit des ausgewählten Sicherheitszustands STATE1, STATE2 durchzuführen.

Insbesondere ist die Sicherheitsstufe S ausgebildet, um im Fall einer sicherheitsrelevanten Fehlfunktion die drei separaten elektronischen Schaltungen IC1 bis IC3 zeitgleich aktiv und kontrolliert in den Sicherheitszustand STATE1 oder STATE2 zu versetzen. Der Sicherheitszustand STATE1 oder STATE2 ist anwendungsabhängig beispielsweise durch einen gebremsten oder durch einen frei laufenden Rotor der Motoreinheit 2, insbesondere des bürstenlosen Gleichstrommotors, erreicht. Zum Beispiel ist der Sicherheitszustand STATE1, STATE2 jeweils ein sicherer Betriebszustand. Insbesondere werden Zustände der Leistungsbrückenschaltung 6, d. h. der Halbbrückenschaltungen HB1 bis HB3 synchronisiert.

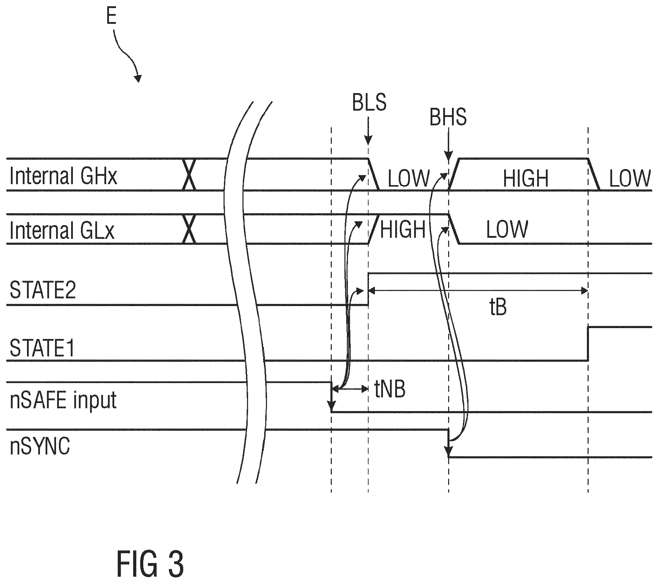

Folgende Beschreibung ist eine Erläuterung zu Figur 2B sowie Figur 3.

Beispielsweise sind zwei auswählbare Sicherheits-zustände STATE1 und STATE2 vorgegeben, wobei in einem ersten Sicherheitszustand STATE1 die Hoch- und Nieder-Leistungsschalter HS, LS abzuschalten sind. In einem zweiten Sicherheitszustand STATE2 sind die Hoch-Leistungsschalter HS abzuschalten und die Nieder-Leistungsschalter LS anzuschalten oder umgekehrt. Der Sicherheitszustand STATE1, STATE2 ist je nach Anwendung der Motoreinheit 2 auswählbar, wodurch die Motorsteuerungsvorrichtung 3 hinsichtlich des Sicherheitszustands STATE1, STATE2 konfigurierbar ist.

Jedem der beiden vorgegebenen Sicherheitszustände STATE1, STATE2 ist ein Schaltzustand der Hoch- und Nieder-Leistungsschalter HS, LS zugeordnet. Zum Beispiel ist mittels des ersten Sicherheitszustands STATE1 ein hochohmiger Zustand, insbesondere ein Freilaufzustand der Motoreinheit 2 erzielbar. Beispielsweise ist der erste Sicherheitszustand STATE1 ein hochohmiger Betriebszustand zwischen Ausgängen einer Ansteuerelektronik der Motoreinheit 2. Mittels des zweiten Sicherheitszustands STATE2 ist beispielsweise ein niederohmiger Zustand, insbesondere ein Abbremszustand der Motoreinheit 2 erzielbar. Beispielsweise ist der zweite Sicherheitszustand STATE2 ein niederohmiger Betriebszustand zwischen Ausgängen einer Ansteuerelektronik der Motoreinheit 2.

Zur synchronisierten Ansteuerung der Treiberstufe 5 ist diese über eine Mehrzahl von Schaltelementen SE mit der Sicherheitsstufe S gekoppelt. Insbesondere sind die elektronischen Schaltungen IC1 bis IC3 jeweils über eine Anzahl von gleichen Schaltelementen SE mit der Sicherheitsstufe S gekoppelt. Schaltelemente SE des gleichen Typs sind über einen jeweiligen Zweig zusammengeführt. Somit sind die jeweils korrespondierenden Schaltelemente SE synchronisiert ansteuerbar.

Im Folgenden werden Funktionen der einzelnen Schaltelemente SE näher erläutert:
Insbesondere sind die Schaltelemente SE Schaltpins.

Die Sicherheitsstufe S umfasst erste Schaltelemente nRESET, die mit jeweils einer der Gate-Treibern 5.1 gekoppelt sind. Insbesondere sind die jeweiligen ersten Schaltelemente nRESET über einen RESET-Zweig verbunden. Zum Beispiel führen bei Inbetriebnahme ermittelte Fehlfunktionen oder andere Fehlfunktionen der Motoreinheit 2 zu einer Rückstellung der Motoreinheit 2. Wenn eine Fehlfunktion der Leistungsbrückenschaltung 6 ermittelt wird und/oder eine Fehlfunktion mit einem zugeordneten Sicherheitszustand STATE1, STATE2 ermittelt wird, werden die ersten Schaltelemente nRESET ignoriert, so dass die Motorsteuerungsvorrichtung 3 die Schaltung des ausgewählten Sicherheitszustand STATE1 oder STATE2 aktiv hält. Beispielsweise können die ersten Schaltelemente nRESET durch die Steuereinheit 4 und/oder durch eine in der Sicherheitsstufe S integrierte Sicherheitsüberwachungsschaltung SAC gesteuert werden. Die Sicherheitsüberwachungsschaltung SAC ist beispielsweise zur Überwachung und Schaltung der in der Sicherheitsstufe S angeordneten Schnittstellen SE, d. h. Schaltpins ausgebildet.

Weiterhin umfasst die Sicherheitsstufe S zweite Schaltelemente SAFE, die mit jeweils einer der Gate-Treibern 5.1 gekoppelt sind. Insbesondere sind die jeweiligen zweiten Schaltelemente SAFE über einen SAFE-Zweig verbunden.

Des Weiteren umfasst die Sicherheitsstufe S dritte Schaltelemente nSAFE, die mit jeweils einer der Gate-Treibern 5.1 gekoppelt sind. Insbesondere sind die jeweiligen dritten Schaltelemente nSAFE über einen nSAFE-Zweig verbunden.

Die zweiten Schaltelemente SAFE und die dritten Schaltelemente nSAFE werden in Abhängigkeit einer ermittelten Fehlfunktion der Leistungsbrückenschaltung 6 geschaltet.

Zusätzlich umfasst die Sicherheitsstufe S vierte Schaltelemente SAFE_SEL, die mit jeweils einer der Gate-Treibern 5.1 gekoppelt sind. Insbesondere sind die jeweiligen vierten Schaltelemente SAFE_SEL über einen SAFE_SEL-Zweig verbunden. Wenn der erste Sicherheitszustand STATE1 ausgewählt ist, sind die vierten Schaltelemente SAFE_SEL auf einen so genannten High-Schaltzustand zu setzen. Insbesondere erfolgt die Aktivierung des gewählten ersten Sicherheitszustands STATE1 durch Setzen der als Eingangspins ausgebildeten zweiten Schaltelemente SAFE auf einen so genannten High-Logikpegel. Im High-Schaltzustand sind alle Hoch- und Nieder-Leistungsschalter HS, LS abgeschaltet, wobei dem High-Schaltzustand ein Zustand mit hoher Impedanz zugeordnet wird.

Wenn der zweite Sicherheitszustand STATE2 ausgewählt ist, sind die vierten Schaltelemente SAFE_SEL auf einen so genannten Low-Schaltzustand zu setzen. Insbesondere erfolgt die Aktivierung des gewählten zweiten Sicherheitszustands STATE2 durch Setzen der als Pin ausgebildeten dritten Schaltelemente nSAFE auf einen so genannten Low-Logikpegel. Im Low-Schaltzustand sind drei Motoranschlüsse, insbesondere Anschlüsse der drei Phasen PH1 bis PH3, entweder über die Hoch-Leistungsschalter HS oder die Nieder-Leistungsschalter LS kurzgeschlossen. Dem Low-Schaltzustand wird ein niederohmiger Zustand zugeordnet, bei dem im Normalfall alle Nieder-Leistungsschalter LS angeschaltet und alle Hoch-Leistungsschalter HS abgeschaltet werden. In einem Ausnahmefall, beispielsweise eines Kurzschlusses zwischen den Hoch-Leistungsschalter HS und den Phasen PH1 bis PH3 der Motoreinheit 2 werden alle Hoch-Leistungsschalter HS angeschaltet und alle Nieder-Leistungsschalter LS abgeschaltet.

Der ausgewählte Sicherheitszustand STATE1, STATE2 wird aktiviert durch Setzen der zweiten Schaltelemente SAFE in einen so genannten High-Schaltzustand oder durch Setzen der dritten Schaltelemente nSAFE in einen so genannten Low-Schaltzustand.

Die zweiten Schaltelemente SAFE sind dedizierte Eingangspins zur Aktivierung des geeigneten Sicherheitszustands STATE1 oder STATE2, wobei die zweiten Schaltelemente SAFE von der Steuereinheit 4 und/oder von der in der Sicherheitsstufe S integrierten Sicherheitsüberwachungsschaltung SAC gesteuert werden.

Die dritten Schaltelemente nSAFE sind bidirektionale Pins. Beispielsweise weisen die dritten Schaltelemente nSAFE eine mit einem so genannten Open-Collector-Ausgang kombinierte Eingangsstruktur auf. Der jeweilige Sicherheitszustand STATE1, STATE2 wird beispielsweise durch die Sicherheitsüberwachungsschaltung SAC und/oder durch einen der Gate-Treiber 5.1 und/oder durch eine der elektronischen Schaltungen IC1 bis IC3 angesteuert.

Ferner umfasst die Sicherheitsstufe S fünfte Schaltelemente nSYNC, die mit jeweils einer der Gate-Treibern 5.1 gekoppelt sind. Insbesondere sind die jeweiligen fünften Schaltelemente nSYNC über einen nSYNC-Zweig verbunden. Wenn der gewünschte bzw. ausgewählte Sicherheitszustand STATE2 der Abbremszustand oder auch ein Bremsmodus ist, wird ein Bremsweg durch die nSYNC-Pinebene definiert. In einer Voreinstellung oder in Abhängigkeit eines Standardwerts (Wert=1), wie in Tabelle T1 und Figur 3 gezeigt, sind die fünften Schaltelemente nSYNC auf einen so genannten High-Pegel eingestellt. Dadurch wird der Abbremszustand durch Anschaltung aller Nieder-Leistungsschalter LS und Abschaltung aller Hoch-Leistungsschalter HS aktiviert. Mit anderen Worten: Die Abbremsung BLS der Motoreinheit 2 erfolgt an den Nieder-Leistungsschaltern LS durch Anschaltung dieser.

Wenn ein Kurzschluss einer Batterie eines +48 V Bordnetzes von zumindest einer der elektronischen Schaltungen IC1 bis IC3 erkannt wird, wird das entsprechende fünfte Schaltelement nSYNC dieser elektronischen Schaltung IC1 bis IC3 auf einen so genannten Low-Pegel (Wert=0), wie in Tabelle T1 und Figur 3 dargestellt, geschaltet oder gezogen. Beispielsweise kann ein Kurzschluss der Batterie eines Motorphasenzustands erkannt werden. Bei Erkennung des Kurzschlusses wird das fünfte Schaltelement nSYNC betätigt. Anschließend leiten alle separaten elektronischen Schaltungen IC1 bis IC3 die Abschaltung des entsprechenden Nieder-Leistungsschalters LS und die Anschaltung des entsprechenden Hoch-Leistungsschalters HS ein. D. h. der Bremsweg wird von den Nieder-Leistungsschaltern LS auf die Hoch-Leistungsschalter HS geändert.

Insbesondere erfolgt eine Abbremsung BHS der Motoreinheit 2 an den Hoch-Leistungsschaltern HS durch Anschaltung dieser. Dadurch wird ein Kurzschluss über die Versorgungsspannung V (+48 V) vermieden. Insbesondere ist ein Kurzschluss von der Versorgungsspannung V (+48 V) gegen Masse PGND für eine kurze Zeit ermöglicht.

Folgende Tabelle T1 zeigt eine Aktivierung des Bremsweges durch Abbremsung BHS oder BLS der jeweiligen Hoch- oder Nieder-Leistungsschalter HS oder LS. Dabei ist dargestellt, in Abhängigkeit welcher Eingangssteuerwerte der dritten und fünften Schaltelemente nSAFE, nSYNC welcher Bremsweg eingestellt wird.

**Tabelle T1**

| nSAFE | nSYNC | Bremsweg |
|---|---|---|
| 1 | X | Normalbetrieb |
| 0 | 0 | Abbremsung BHS an den Hoch-Leistungsschaltern HS |
| 0 | 1 | Abbremsung BLS an den Nieder-Leistungsschaltern LS |

**Figur 3** zeigt einen Einstellungsverlauf E der beiden Sicherheitszustände STATE1, STATE2 in Abhängigkeit eingehender Steuerwerte GHx, GLx. Insbesondere zeigt die Figur 3 einen Bremssteuerungsmodus, welcher durch die Stellung und/oder Schaltung der fünften Schaltelemente nSYNC und/oder durch die nSYNC-Pinebene definiert ist.

Bei Eingang des Steuerwerts GHx werden die Hoch-Leistungsschalter HS der Halbbrückenschaltungen HB1 bis HB3 angesteuert. Bei Eingang des Steuerwerts GLx werden die Nieder-Leistungsschalter LS der Halbbrückenschaltung HB1 bis HB3 angesteuert.

Dabei ist zu verstehen, dass in Abhängigkeit der Eingangssteuerwerte der dritten und fünften Schaltelemente nSAFE, nSYNC die Steuerwerte GHx, GLx eine synchronisierte Abschaltung und Anschaltung der jeweiligen Hoch- und Nieder-Leistungsschalter HS, LS ansteuern.

Im dargestellten Ausführungsbeispiel wird bei Erfassung eines nSAFE-Inputs, wobei eine nSAFE-Pinebene niedrig gesetzt wird, in Abhängigkeit einer ersten Zeitdauer tNB der zweite Sicherheitszustand STATE2 aktiviert und eingestellt. Dabei werden die Hoch-Leistungsschalter HS in Abhängigkeit des Steuerwerts GHx abgeschaltet und die Nieder-Leistungsschalter LS in Abhängigkeit des Steuerwerts GLx angeschaltet. Anschließend erfolgt eine Umkehrung der Schaltungen der Hoch- und Leistungsschalter HS, LS, wenn ein nSYNC-Input erfasst wird, wobei eine nSYNC-Pinebene niedrig gesetzt wird. In Abhängigkeit einer Zeitdauer tB wird die Abbremsung BHS an den Hoch-Leistungsschaltern HS durch Anschaltung dieser eingeleitet. Zur Umschaltung des zweiten Sicherheitszustand STATE2 in den ersten Sicherheitszustand STATE1 werden die Hoch-Leistungsschalter HS abgeschaltet.

### Bezugszeichenliste

- 1: Fahrzeug
- 2: Motoreinheit
- 3: Motorsteuerungsvorrichtung
- 4: Steuereinheit
- 5: Treiberstufe
- 5.1: Gate-Treiber
- 6: Leistungsbrückenschaltung

- BHS: Abbremsung HS
- BLS: Abbremsung LS
- CS: Kontrollsignal
- E: Einstellungsverlauf
- GHx, GLx: Steuerwert
- HB1 bis HB3: Halbbrückenschaltung
- HS: Hoch-Leistungsschalter
- HSP: Hoch-Leistungszweig
- IC1 bis IC3: elektronische Schaltung
- LS: Nieder-Leistungsschalter
- LSP: Nieder-Leistungszweig
- PGND: Masse
- PH1 bis PH3: Phase
- S: Sicherheitsstufe
- SAC: Sicherheitsüberwachungsschaltung
- SE: Schaltelement
- STATE1, STATE2: Sicherheitszustand
- V: Versorgungsspannung
- tNB, tB: Zeitdauer

- nRESET: erstes Schaltelement
- SAFE: zweites Schaltelement
- nSAFE: drittes Schaltelement
- SAFE_SEL: viertes Schaltelement
- nSYNC: fünftes Schaltelement

## Patentansprüche

1. Motorsteuerungsvorrichtung (3) für eine Motoreinheit (2) mit
- einer Steuereinheit (4),
- einer Sicherheitsstufe (S) zur Einstellung eines
Sicherheitszustands (STATE1, STATE2) der Motoreinheit (2),
- einer der Steuereinheit (4) nachgeordneten Treiberstufe (5), und
- einer der Treiberstufe (5) nachgeordneten Leistungsbrückenschaltung (6), wobei
- die Treiberstufe (5) drei separate elektronische Schaltungen (IC1 bis IC3) zur Ansteuerung der Leistungsbrückenschaltung (6) umfasst, wobei die Treiberstufe (5) hierfür drei separate Gate-Treiber (5.1) umfasst, wobei jedem Gate-Treiber (5.1) jeweils eine der elektronischen Schaltungen (IC1 bis IC3) zugeordnet ist, wobei die elektronischen Schaltungen anwendungsspezifische integrierte Schaltungen sind, und
- die Sicherheitsstufe (S) ausgebildet ist, im Fall einer ermittelten Fehlfunktion der Leistungsbrückenschaltung (6)
- einen der Fehlfunktion zugeordneten
Sicherheitszustand (STATE1, STATE2) auszuwählen und/oder zu aktivieren und
- eine Synchronisation der drei elektronischen Schaltungen (IC1 bis IC3) in Abhängigkeit des ausgewählten Sicherheitszustands (STATE1, STATE2) durchzuführen.

2. Motorsteuerungsvorrichtung (3) nach Anspruch 1, wobei die Sicherheitsstufe (S) zwischen der Steuereinheit (4) und der Treiberstufe (5) angeordnet ist.

3. Motorsteuerungsvorrichtung (3) nach Anspruch 1 oder 2, wobei die Leistungsbrückenschaltung (6) drei Halbbrückenschaltungen (HB1 bis HB3) umfasst, wobei jede der Halbbrückenschaltungen (HB1 bis HB3) eine Phase (PH1 bis PH3) ausgibt.

4. Motorsteuerungsvorrichtung (3) nach Anspruch 3, wobei jeweils eine der Halbbrückenschaltungen (HB1 bis HB3) mit jeweils einer der elektronischen Schaltungen (IC1 bis IC3) gekoppelt ist.

5. Motorsteuerungsvorrichtung (3) nach Anspruch 3 oder 4, wobei die Halbbrückenschaltungen (HB1 bis HB3) jeweils einen Hoch-Leistungsschalter (HS) und einen Nieder-Leistungsschalter (LS) umfassen, die in Abhängigkeit der Synchronisation der elektronischen Schaltungen (IC1 bis IC3) jeweils ab- und/oder anschaltbar sind.

6. Motorsteuerungsvorrichtung (3) nach Anspruch 5,
wobei zwei auswählbare Sicherheitszustände (STATE1, STATE2) vorgegeben sind, wobei
- in einem ersten Sicherheitszustand (STATE1) die Hoch- und Nieder-Leistungsschalter (HS, LS) abzuschalten sind, und
- in einem zweiten Sicherheitszustand (STATE2) die Hoch-Leistungsschalter (HS) abzuschalten und die Nieder-Leistungsschalter (LS) anzuschalten sind und/oder umgekehrt.

7. Motorsteuerungsvorrichtung (3) nach einem der vorhergehenden Ansprüche, wobei die elektronischen Schaltungen (IC1 bis IC3) der Treiberstufe (5) jeweils über eine Anzahl von Schaltelementen (SE) mit der Sicherheitsstufe (S) gekoppelt sind.

8. Motorsteuerungsvorrichtung (3) nach einem der vorhergehenden Ansprüche, wobei die Motoreinheit (2) ein dreiphasiger bürstenloser Gleichstrommotor ist.

9. Verfahren zum Betrieb einer Motorsteuerungsvorrichtung (3) nach einem der vorhergehenden Ansprüche 1 bis 8,
wobei mittels der Sicherheitsstufe (S) im Fall einer ermittelten Fehlfunktion der Leistungsbrückenschaltung (6)
- ein der Fehlfunktion zugeordneter Sicherheitszustand (STATE1, STATE2) ausgewählt wird und/oder aktiviert wird und
- eine Synchronisation der drei elektronischen Schaltungen (IC1 bis IC3) in Abhängigkeit des ausgewählten Sicherheitszustands (STATE1, STATE2) durchgeführt wird.

10. Verfahren nach Anspruch 9, wobei
- in einem ersten Sicherheitszustand(STATE1) die Hoch- und Nieder-Leistungsschalter (HS, LS) abgeschaltet werden, und
- in einem zweiten Sicherheitszustand(STATE2) die Hoch-Leistungsschalter (HS) abgeschaltet und die Nieder-Leistungsschalter (LS) angeschaltet werden und/oder umgekehrt.

## Claims

1. Motor control device (3) for a motor unit (2), having
- a control unit (4),
- a safety stage (S) for setting a safety state (STATE1, STATE2) of the motor unit (2),
- a driver stage (5) arranged downstream of the control unit (4), and
- a power bridge circuit (6) arranged downstream of the driver stage (5), wherein
- the driver stage (5) comprises three separate electronic circuits (IC1 to IC3) for actuating the power bridge circuit (6), wherein the driver stage (5) comprises three separate gate drivers (5.1) for this purpose, wherein each gate driver (5.1) is respectively assigned one of the electronic circuits (IC1 to IC3), wherein the electronic circuits are application-specific integrated circuits, and
- the safety stage (S) is designed to, in the event that a malfunction of the power bridge circuit (6) is determined,
- select and/or activate a safety state (STATE1, STATE2) assigned to the malfunction, and
- carry out synchronization of the three electronic circuits (IC1 to IC3) in dependence on the selected safety state (STATE1, STATE2).

2. Motor control device (3) according to Claim 1, wherein the safety stage (S) is arranged between the control unit (4) and the driver stage (5).

3. Motor control device (3) according to Claim 1 or 2, wherein the power bridge circuit (6) comprises three half-bridge circuits (HB1 to HB3), wherein each of the half-bridge circuits (HB1 to HB3) outputs a phase (PH1 to PH3).

4. Motor control device (3) according to Claim 3, wherein each one of the half-bridge circuits (HB1 to HB3) is coupled to a respective one of the electronic circuits (IC1 to IC3).

5. Motor control device (3) according to Claim 3 or 4, wherein the half-bridge circuits (HB1 to HB3) each comprise a high-power switch (HS) and a low-power switch (LS) which are each able to be switched off and/or on in dependence on the synchronization of the electronic circuits (IC1 to IC3).

6. Motor control device (3) according to Claim 5, wherein two selectable safety states (STATE1, STATE2) are predefined, wherein
- in a first safety state (STATE1), the high- and low-power switches (HS, LS) are to be switched off, and
- in a second safety state (STATE2), the high-power switches (HS) are to be switched off and the low-power switches (LS) are to be switched on and/or vice versa.

7. Motor control device (3) according to one of the preceding claims, wherein the electronic circuits (IC1 to IC3) of the driver stage (5) are each coupled to the safety stage (S) via a number of switching elements (SE).

8. Motor control device (3) according to one of the preceding claims, wherein the motor unit (2) is a three-phase brushless DC motor.

9. Method for operating a motor control device (3) according to one of preceding Claims 1 to 8,
wherein, by means of the safety stage (S), in the event that a malfunction of the power bridge circuit (6) is determined,
- a safety state (STATE1, STATE2) assigned to the malfunction is selected and/or activated, and
- synchronization of the three electronic circuits (IC1 to IC3) is carried out in dependence on the selected safety state (STATE1, STATE2).

10. Method according to Claim 9, wherein
- in a first safety state (STATE1), the high- and low-power switches (HS, LS) are switched off, and
- in a second safety state (STATE2), the high-power switches (HS) are switched off and the low-power switches (LS) are switched on and/or vice versa.

## Revendications

1. Dispositif de commande de moteur (3) pour une unité de moteur (2) avec
- une unité de commande (4),
- un niveau de sécurité (S) destiné à régler un état de sécurité (STATE1, STATE2) de l'unité de moteur (2),
- un étage d'attaque (5) disposé en aval de l'unité de commande (4), et
- un circuit de pont de puissance (6) disposé en aval de l'étage d'attaque (5),
- l'étage d'attaque (5) comprenant trois circuits électroniques distincts (IC1 à IC3) destinés à piloter le circuit de pont de puissance (6), l'étage d'attaque (5) comprenant à cet effet trois pilotes de grille (5.1) distincts, un des circuits électroniques (IC1 à IC3) étant respectivement associé à chaque pilote de grille (5.1), les circuits électroniques étant des circuits intégrés à application spécifique, et
- le niveau de sécurité (S) étant formé pour, dans le cas d'un dysfonctionnement du circuit de pont de puissance (6),
- sélectionner et/ou activer un état de sécurité associé au dysfonctionnement (STATE1, STATE2) et
- effectuer une synchronisation des trois circuits électroniques (IC1 à IC3) en fonction de l'état de sécurité (STATE1, STATE2) sélectionné.

2. Dispositif de commande de moteur (3) selon la revendication 1, le niveau de sécurité (S) étant disposé entre l'unité de commande (4) et l'étage d'attaque (5).

3. Dispositif de commande de moteur (3) selon la revendication 1 ou 2, le circuit de pont de puissance (6) comprenant trois circuits de demi-pont (HB1 à HB3), chacun des circuits de demi-pont (HB1 à HB3) émettant une phase (PH1 à PH3).

4. Dispositif de commande de moteur (3) selon la revendication 3, un des circuits de demi-pont (HB1 à HB3) étant respectivement couplé à respectivement un des circuits électroniques (IC1 à IC3).

5. Dispositif de commande de moteur (3) selon la revendication 3 ou 4, les circuits de demi-pont (HB1 à HB3) comprenant chacun un disjoncteur à haute tension (HS) et un disjoncteur à basse tension (LS), qui peuvent être coupés et/ou activés en fonction de la synchronisation des circuits électroniques (IC1 à IC3).

6. Dispositif (3) de commande de moteur selon la revendication 5,
deux états de sécurité (STATE1, STATE2) pouvant être sélectionnés étant spécifiés,
- les disjoncteurs à haute et basse tension (HS, LS) devant être coupés dans un premier état de sécurité (STATE1), et
- les disjoncteurs à haute tension (HS) devant être coupés et les disjoncteurs à basse tension (LS) devant être activés et/ou vice versa dans un deuxième état de sécurité (STATE2).

7. Dispositif de commande de moteur (3) selon l'une des revendications précédentes, les circuits électroniques (IC1 à IC3) de l'étage d'attaque (5) étant chacun couplés par un certain nombre d'éléments de commutation (SE) au niveau de sécurité (S).

8. Dispositif de commande de moteur (3) selon l'une des revendications précédentes, l'unité de moteur (2) étant un moteur à courant continu triphasé sans balais.

9. Procédé destiné à faire fonctionner un dispositif de commande de moteur (3) selon l'une des revendications précédentes 1 à 8,
le niveau de sécurité (S) permettant, dans le cas d'un dysfonctionnement du circuit de pont de puissance (6),
- de sélectionner et/ou d'activer un niveau de sécurité (STATE1, STATE2) associé au dysfonctionnement,
- d'effectuer une synchronisation des trois circuits électroniques (IC1 à IC3) en fonction de l'état de sécurité (STATE1, STATE2) sélectionné.

10. Procédé selon la revendication 9,
- les disjoncteurs à haute et basse tension (HS, LS) étant coupés dans un premier état de sécurité (STATE1), et
- les disjoncteurs à haute tension (HS) étant coupés et les disjoncteurs à basse tension (LS) étant activés et/ou vice versa dans un deuxième état de sécurité (STATE2).
